# EUROPEAN PATENT APPLICATION

(11) **EP 4 250 625 A1**
(43) Date of publication of application: **27.09.2023**
(21) Application number: 22163706.9
(22) Date of filing: 23.03.2022
(51) Int. Cl.: H04L 5/14, H04B 7/08, H04B 7/0413, H04B 1/56

(54) **AN APPARATUS AND METHOD FOR DIFFERENT MODES OF RADIO TRANSMISSION AND RADIO RECEPTION**

(71) Applicant: Nokia Technologies Oy, 02610 Espoo (FI)
(72) Inventor: NIELSEN, Kim, 9280 Storvorde (DK); OLESEN, Poul, 9530 Støvring (DK); SVENDSEN, Simon, 9000 Aalborg (DK); BLÜCHER BRINK, Stig, 9220 Aalborg Øst (DK); HARREBEK, Johannes, 9000 Aalborg (DK)
(74) Representative: Nokia EPO representatives

(57) **Abstract**

An apparatus configured to enable different modes of concurrent radio transmission and radio reception, in the same time-frequency channel, using multiple antennas, the apparatus comprising means for
a) selecting concurrent transmission and reception on different ones of the multiple antennas,
b) selecting concurrent transmission and reception at overlapping frequencies or at non-overlapping frequencies,
c) selecting one of non-diversity reception, diversity reception, or multiple-input multiple-output (MIMO) reception.

## Description

### TECHNOLOGICAL FIELD

Embodiments of the present disclosure relate to an apparatus configured to enable different modes of radio transmission and radio reception.

### BACKGROUND

A terminal in a cellular telecommunications network is configured to transmit radio signals and is configured to receive radio signals.

A radio signal when transmitted from a terminal can have sufficient power to reach a network base station. A radio signal, when received at a terminal, can have travelled from the network base station. A radio signal transmitted at a terminal apparatus can therefore have a significant interference effect on reception of a radio signal at the terminal.

One way of overcoming this problem is for the terminal to operate in a time-divided mode where radio transmission and radio reception are not concurrent but time-separated. However, this can introduce latency.

The reception of a radio signal, transmitted from a network base station, at a terminal can depend upon the orientation of the terminal. Additionally, spatially separated antennas can be used at the terminal to provide diversity reception and improve signal reception.

Multiple antennas can also be used at the terminal to create multiple parallel data channels using multiple-input multiple-output (MIMO). This can increase the bandwidth of data transfer.

### BRIEF SUMMARY

According to various, but not necessarily all, embodiments there is provided an apparatus configured to enable different modes of concurrent radio transmission and radio reception, in the same time-frequency channel, using multiple antennas, the apparatus comprising means for
a) selecting concurrent transmission and reception on different ones of the multiple antennas,
b) selecting concurrent transmission and reception at overlapping frequencies or at non-overlapping frequencies,
c) selecting one of non-diversity reception, diversity reception, or multiple-input multiple-output (MIMO) reception.

In some but not necessarily all examples, concurrent transmission and reception in the same time-frequency channel comprises simultaneous transmission and reception in the same operational frequency band.

In some but not necessarily all examples, the apparatus is configured to selectively enable self-interference cancellation at reception; and/or
configured to selectively enable differential self-interference cancellation at reception using signals received at two or more antennas; and/or
configured to selectively enable frequency specific filtration at reception when concurrent transmission and reception at non-overlapping frequencies has been selected.

In some but not necessarily all examples, selection of concurrent transmission and reception at overlapping frequencies or at non-overlapping frequencies is controlled by messages received from a network and/or wherein selection of MIMO reception is controlled by messages received from a network.

In some but not necessarily all examples, the messaging from the network is dependent upon a data transfer demand provided to the network by the apparatus, wherein MIMO reception provides higher bandwidth.

In some but not necessarily all examples, selecting non-diversity reception is controlled by the apparatus and/or wherein selecting diversity reception is controlled by the apparatus.

In some but not necessarily all examples, selection is based on a number of available antennas and/or selection is based on a quality of a reception communication channel between a network and the apparatus.

In some but not necessarily all examples, the apparatus is configured to selectively enable self-interference cancellation at reception; wherein selectively enabling self-interference cancellation is controlled by the apparatus.

In some but not necessarily all examples, determining whether or not to selectively enable self-interference cancellation is based on an extent of interference by transmission from the apparatus on reception at the apparatus.

In some but not necessarily all examples, the apparatus is configured to selectively enable differential self-interference cancellation at reception; wherein selecting between self-interference cancellation and differential self-interference cancellation is controlled by the apparatus.

In some but not necessarily all examples, determining whether or not to selectively enable self-interference cancellation or differential self-interference cancellation is based on a number of available antennas.

In some but not necessarily all examples, the apparatus is configured to selectively enable frequency specific filtration at reception, wherein selecting frequency specific filtration at reception is controlled by the apparatus.

In some but not necessarily all examples, the apparatus is configured or configurable as user equipment.

According to various, but not necessarily all, embodiments there is provided a method for enabling different modes of concurrent radio transmission and radio reception, in the same time-frequency channel, using multiple antennas, the method comprising:
a) selecting concurrent transmission and reception on different ones of the multiple antennas,
b) selecting concurrent transmission and reception at overlapping frequencies or at non-overlapping frequencies,
c) selecting one of non-diversity reception, diversity reception, or MIMO reception.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2A shows another example of the subject matter described herein;
FIG. 2B shows an example of the subject matter described herein;
FIG. 3 shows another example of the subject matter described herein;
FIG. 4 shows an example of the subject matter described herein;
FIG. 5 shows another example of the subject matter described herein;
FIG. 6 shows an example of the subject matter described herein;
FIG. 7 shows another example of the subject matter described herein;
FIG. 8 shows an example of the subject matter described herein;
FIG. 9 shows another example of the subject matter described herein; and
FIG. 10 shows another example of the subject matter described herein.

### DETAILED DESCRIPTION

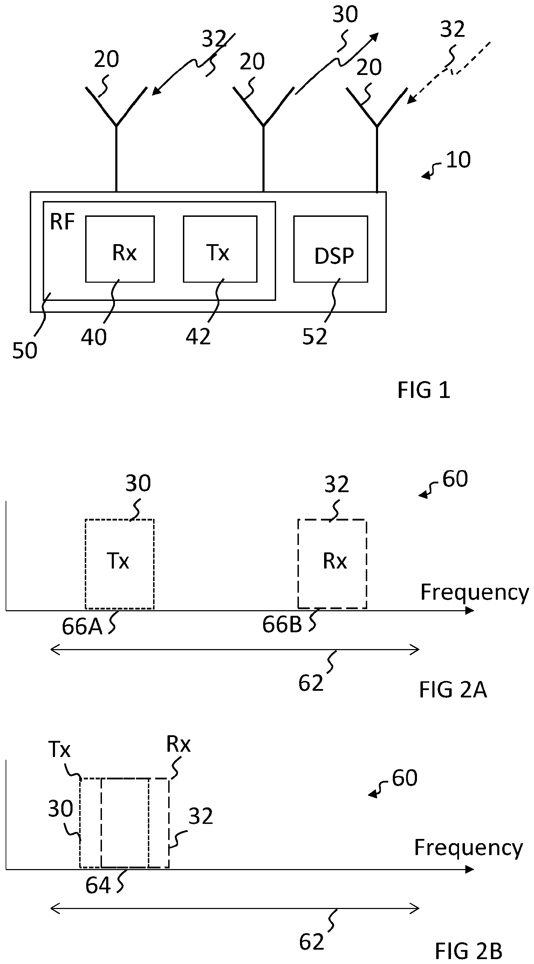

FIG 1 illustrates an example of an apparatus 10 configured to enable different modes of concurrent radio transmission 30 and radio reception 32, in the same time-frequency channel, using multiple antennas 20.

FIG 2 illustrates concurrent transmission 30 and reception 32 by the apparatus 10 in the same time-frequency channel 60. This comprises simultaneous transmission 30 and reception 32 in the same operational frequency band 62.

The apparatus 10 comprising means for
a) selecting concurrent transmission 30 and reception 32 on different ones of the multiple antennas 20;
b) selecting concurrent transmission 30 and reception 32 at overlapping frequencies 64 or at non-overlapping frequencies 66A, 66B; and
c) selecting one of non-diversity reception 32, diversity reception 32, or multiple-input multiple-output (MIMO) reception 32.

Referring to FIG 1, the apparatus 10 comprises a radio frequency receiver 40, a radio frequency transmitter 42 and a plurality of antennas 20.

The radio frequency receiver 40 is configured to use one or more of the antennas 20. The radio frequency receiver 40 can comprise one or more radio frequency reception chains for supporting reception from one or more antennas 20. The parallel receiver chains can operate simultaneously and, for example, support reception diversity and multiple-input multiple-output (MIMO).

The radio frequency transmitter 42 is configured to use at least one of the antennas 20.

Digital signal processing (DSP) circuitry 52 is configured to provide data for digital to analogue conversion and transmission by the transmitter 42.

Digital signal processing circuitry 52 is configured to receive data from the receiver 40 after analogue to digital conversion.

Diversity reception occurs at a receiver, when a signal transmitted by a base station is received at multiple antennas of the apparatus 10 that are physically separated (spatially diverse). There is at least a second source for the same spectrum and data.

Non-diversity reception occurs when the receiver 40 receives a transmitted signal that has been received at one antenna. There is a single source for the data.

MIMO reception occurs when the receiver 40 receives different concurrently transmitted signals at different ones of multiple antennas 20. Data is split over different downlinks to different antennas 20.

FIG 2A illustrates concurrent radio transmission 30 (Tx) and radio reception 32 (Rx) in the same time-frequency channel 60. This comprises simultaneous transmission 30 (Tx) and reception 32 (Rx) in the same operational frequency band 62. In this example, the concurrent radio transmission 30 (Tx) and radio reception 32 (Rx) are in non-overlapping frequencies 66A, 66B.

FIG 2B illustrates concurrent radio transmission 30 (Tx) and radio reception 32 (Rx) in the same time-frequency channel 60. This comprises simultaneous transmission 30 (Tx) and reception 32 (Rx) in the same operational frequency band 62. In this example, the concurrent radio transmission 30 (Tx) and radio reception 32 (Rx) are in overlapping frequencies 64.

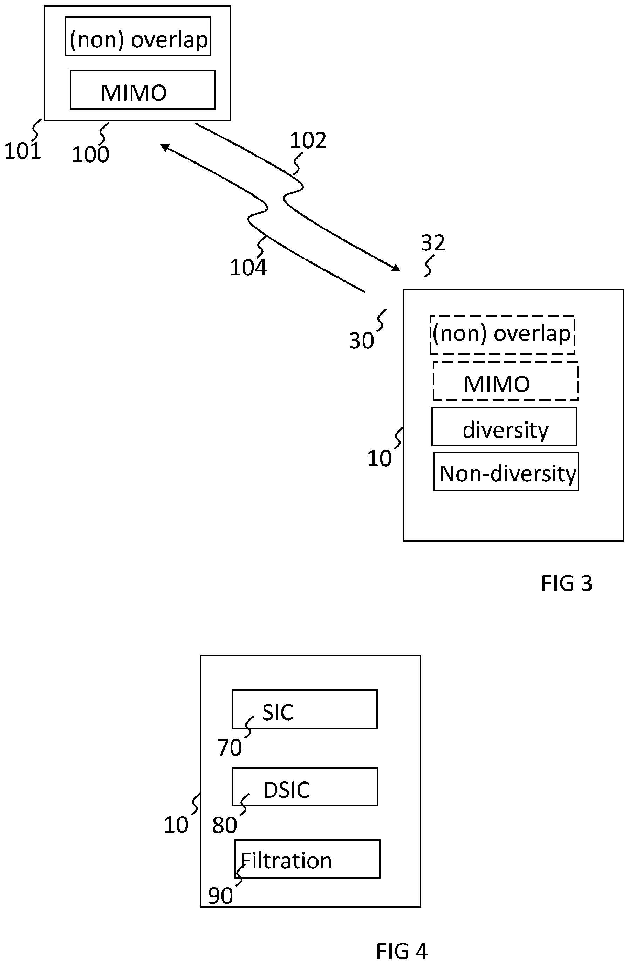

FIG 3 illustrates an example of a system comprising a network 100 and the apparatus 10.

In this example, but not necessarily all examples, the system is a cellular telecommunications system that comprises multiple network nodes 101, for example base stations, for communicating with multiple terminal apparatus 10. In a current third generation partnership (3GPP) system the network node 101 is a node-B and the terminal apparatus 10 is user equipment.

In the illustrated example, the network 100 transmits radio signals that are received 32 by the apparatus 10. These are downlink radio signals. They can comprise downlink messages 102. The network 100 receives radio signals that are transmitted 30 by the apparatus 10. These are uplink radio signals. They can comprise uplink messages 104.

As previously described the apparatus 10 is configured to select concurrent transmission 30 and reception 32 on different ones of the multiple antennas 20 at overlapping frequencies 64 or at non-overlapping frequencies 66A, 66B, and to select one of:
non-diversity reception 32,
diversity reception 32, or
multiple-input multiple-output (MIMO) reception 32.

In this example, the selection of concurrent transmission 30 and reception 32 at overlapping frequencies 64 or at non-overlapping frequencies 66A, 66B is controlled by one or more downlink messages 102 received from the network 100.

In this example, the selection of MIMO reception 32 is controlled by one or more downlink messages 102 received from the network 100. In at least some examples, the downlink message102 from the network 100 that causes MIMO reception at the apparatus 10 is dependent upon a downlink data transfer demand. The downlink data transfer demand can arise from the network side or the apparatus side. In the latter case, the apparatus 10 can provide an uplink message 104 indicating a downlink data transfer demand. The MIMO reception 32 provides higher bandwidth.

In some examples, the apparatus 10 is configured to determine whether it should perform non-diversity reception 32 or diversity reception 32. In this example, selecting non-diversity reception 32 is controlled by the apparatus 10 and/or selecting diversity reception 32 is controlled by the apparatus 10. In at least some examples, the selection is based on a number of available antennas 20 and/or selection is based on a quality of a reception communication channel between the network and the apparatus 10.

As illustrated in FIG 4, in some examples, the apparatus 10 is also configured to determine whether it should perform any one or more of self-interference cancellation (SIC) 70, differential self-interference cancellation (DSIC) 80 and frequency selective filtration 90. The term 'cancellation' will be used to refer collectively to self-interference cancellation (SIC) 70 and differential self-interference cancellation (DSIC) 80.

The determination by the apparatus 10 can, in some examples, be triggered by a downlink message 102 from the network 100. The downlink message 102 can, in some examples, be dependent upon capabilities of the apparatus 10 that have been previously reported to the network 100 in an uplink message 104. The downlink message 102 can, in some examples, be dependent upon a bandwidth and/or latency requirement for data transfer in the downlink and/or an importance/priority level.

In some examples, an RRC_RECONFIGURATION message, in a new format, can be used as a downlink message 102 from the network 100. The apparatus 10 identifies this new message format and evaluates the current use of antennas 20, for example.

FIG 4 illustrates an example of the apparatus 10 that is configured to selectively enable self-interference cancellation 70 during reception 32; and/or configured to selectively enable differential self-interference cancellation 80 at reception 32 using signals received at two or more antennas 20; and/or configured to selectively enable frequency specific filtration 90 at reception 32 when concurrent transmission 30 and reception 32 at non-overlapping frequencies 66A, 66B has been selected.

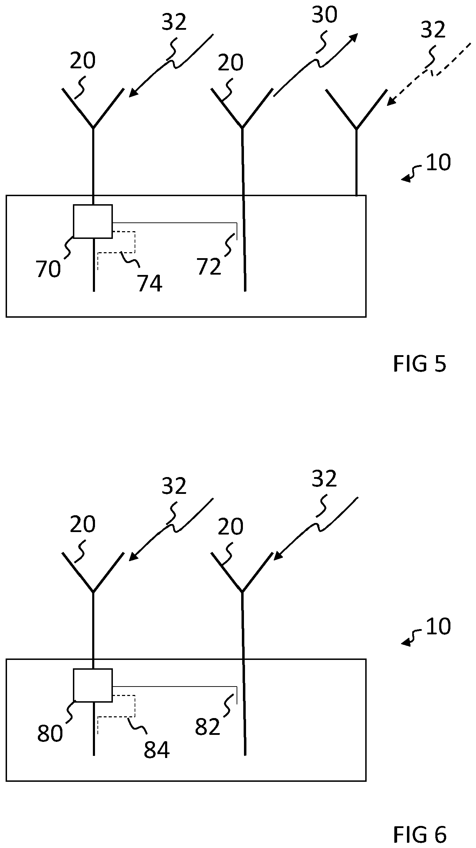

FIG 5 illustrates an example of self-interference cancellation 70. Only the components required to explain self-interference cancellation are shown.

Self-interference occurs at the apparatus 10 when the signal in a reception path from an antenna 20 to receiver circuitry 40 (not illustrated) comprises not only the signal of interest transmitted to the apparatus 10 by the network 100 but also comprises an unwanted noise signal, the self-interference signal, created by transmission 30 by the apparatus 10.

Self-interference cancellation creates a putative self-interference signal and then cancels the putative self-interference signal from the signal in the reception path. If the putative self-interference signal is substantially equal to the actual self-interference signal and is subtracted from the signal in the reception path, then the resultant signal is substantially the signal of interest.

The putative self-interference signal can, for example, be determined in dependence upon sampling 72 of the signal in the transmission path.

In the examples illustrated, but not necessarily all examples, the self-interference cancellation occurs in the analogue domain before analogue to digital conversion.

In some but not necessarily all examples, a reference signal determined by sampling 72 the signal in the transmission path is adapted to become the putative self-interference signal e.g., adapted by phase and/or amplitude.

In some but not necessarily all examples, the adaptation of the reference signal determined by sampling 72 the signal in the transmission path to form the putative self-interference signal, is dependent upon a feedback loop 74 that feeds back the residual signal.

The apparatus 10 is configured to selectively enable self-interference cancellation 70 during reception 32. In this example, the selective enabling of self-interference cancellation is controlled by the apparatus 10. In at least some examples, the determining of whether or not to selectively enable self-interference cancellation is based on an extent of interference by transmission 30 on reception 32.

FIG 6 illustrates an example of differential self-interference cancellation. Only the components required to explain differential self-interference cancellation are shown.

If there is self-interference, and there are two reception paths available, it can be assumed that there is correlation between the self-interference in one reception path and the self-interference in the other reception path.

Through phase alignment and amplitude alignment the two self-interference signals from the additional reception paths can be combined coherently, which will ideally increase the signal-to-noise ratio (SNR) by up to 3dB for improving the self-interference cancellation performance compared to 'single ended' cancellation.

The differential self-interference cancellation 80 creates a putative self-interference signal and then cancels the putative self-interference signal from the signal in the reception path. If the putative self-interference signal is substantially equal to the actual self-interference signal and is subtracted from the signal in the reception path, then the resultant signal is substantially the signal of interest.

The putative self-interference signal can, for example, be determined in dependence upon sampling 82 of the signal in the other reception path.

In the examples illustrated, but not necessarily all examples, the self-interference cancellation occurs in the analogue domain before analogue to digital conversion.

In some but not necessarily all examples, a reference signal determined by sampling 82 the signal in the other reception path is adapted to become the putative self-interference signal e.g., adapted by phase and/or amplitude.

In some but not necessarily all examples, the adaptation of the reference signal determined by sampling 82 the signal in the other reception path to form the putative self-interference signal, is dependent upon a feedback loop 84 that feeds back the residual signal.

The apparatus 10 is configured to selectively enable differential self-interference cancellation 80 at reception 32.

In this example, selecting between self-interference cancellation 70 and differential self-interference cancellation 80 is controlled by the apparatus 10.

In at least some examples, the determining of whether or not to selectively enable self-interference cancellation 70 or differential self-interference cancellation 80 is based on a number of available antennas 20.

In at least some examples, the determining of whether to selectively enable one of self-interference cancellation 70 or differential self-interference cancellation 80 is based on an extent of interference by transmission 30 on reception 32.

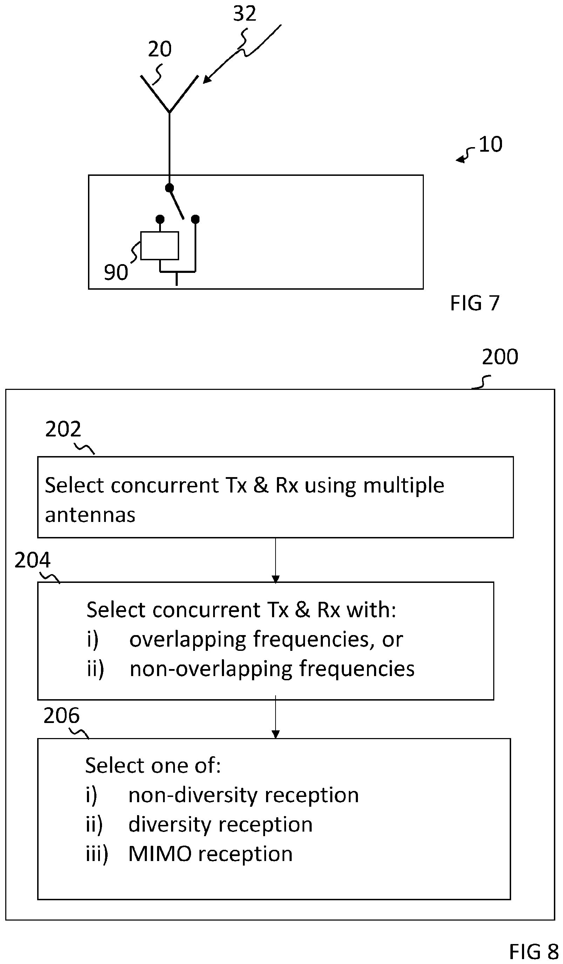

FIG 7 illustrates an example of the apparatus 10 that is configured to selectively enable frequency specific filtration 90 at reception 32 when concurrent transmission 30 and reception 32 at non-overlapping frequencies 66A, 66B has been selected and is controlled by the apparatus 10. Only the components required to explain frequency specific filtration 90 are shown.

This mode can be selected based on an isolation between the antennas 20 used for transmission 30 and reception 32 when concurrent transmission 30 and reception 32 at non-overlapping frequencies 66A, 66B has been selected. The use of the frequency specific filtration 90 increases the effective isolation between the reception antenna and the transmission antenna.

The frequency specific filtration 90 can, for example, be provided by a bandpass filter. The frequency specific filtration 90 can comprise one or more filters that can be switched into the reception signal path and/or the transmission signal by the apparatus 10. The filter can for example, be one of or a combination of: a bandpass filter, a low pass filter or a high pass filter. The frequency specific filtration 90 can, for example, be provided using filter banks. A filter bank can comprise various forms of frequency selectivity across the operational frequency band 62.

A bandpass filter or other frequency selectivity in the reception signal path has a bandwidth within but narrower than the operational frequency band 62. The bandpass is wider than the reception channel bandwidth but is outside the transmission channel bandwidth. The frequency specific filtration 90 therefore provides a high impedance at the transmission frequencies and a low/matched impedance at the reception frequencies.

A bandpass filter or other frequency selectivity in the transmission signal path has a bandwidth within but narrower than the operational frequency band 62. The bandpass is wider than the transmission channel bandwidth but is outside the reception channel bandwidth. The frequency specific filtration 90 therefore provides a high impedance at the reception frequencies and a low/matched impedance at the transmission frequencies.

FIG 8 illustrates an example of a method 200.

The method 200 enables different modes of concurrent radio transmission 30 and radio reception 32, in the same time-frequency channel 60, using multiple antennas 20.

The method 200 comprises, at block 202, selecting concurrent transmission 30 and reception 32 on different ones of the multiple antennas 20.

The method 200 comprises, at block 204, selecting concurrent transmission 30 and reception 32 at overlapping frequencies 64 or at non-overlapping frequencies 66A, 66B.

The method 200 comprises, at block 206, selecting one of non-diversity reception 32, diversity reception 32, or MIMO reception 32.

The mode where there is concurrent transmission 30 and reception 32 on different ones of the multiple antennas 20 at overlapping frequencies 64 can be referred to as an overlapping duplex mode.

The overlapping duplex mode is a mode where the apparatus 10 is transmitting and receiving simultaneously at the same frequency. For example, the apparatus 10, when in the overlapping duplex mode, is capable of simultaneously (i.e., in the same slot/symbol) transmitting and receiving on one unpaired time division duplex (TDD) carrier on overlapping frequency resources. i.e., within one unpaired TDD carrier, the physical resource blocks (PRBs) can be assigned for uplink and downlink transmission. The overlapping duplex mode is a full duplex mode from the perspective of the network where the uplink/downlink at a particular frequency are not-time separated.

The mode where there is concurrent transmission 30 and reception 32 on different ones of the multiple antennas 20 at non-overlapping frequencies 66A, 66B can be referred to as a non-overlapping duplex mode.

The non-overlapping duplex mode is a mode where the apparatus 10 is transmitting and receiving simultaneously but not in the same frequency. For example, the apparatus 10, when in the non-overlapping duplex mode is capable of simultaneously (i.e., in the same slot/symbol) transmitting and receiving on one unpaired TDD carrier on non-overlapping frequency resources. i.e., within one unpaired TDD carrier, some PRBs are assigned for uplink transmission, other PRBs are assigned for downlink transmission, while other PRBs may be assigned for a guard band. The non-overlapping duplex mode can be a Dynamic/Flexible time division duplex (TDD) mode from the perspective of the network where the uplink/downlink at particular frequencies are time separated to different apparatus 10.

The overlapping duplex mode and the non-overlapping duplex mode are therefore different modes of concurrent radio transmission 30 and radio reception 32, in the same time-frequency channel 60, that use multiple antennas 20.

In both modes there is concurrent transmission 30 and reception 32 on different ones of the multiple antennas 20. In the overlapping duplex mode, there is concurrent transmission 30 and reception 32 at overlapping frequencies 64 (FIG 2A). In the non-overlapping duplex mode, there is concurrent transmission 30 and reception 32 at non-overlapping frequencies 66A, 66B (FIG 2B).

In the following examples, the apparatus 10 has four antennas 20 (Ant1, Ant2, Ant3, Ant4). The apparatus 10 uses one of the antennas 20 for uplink transmission. The apparatus 10 uses at least one antenna 20 for downlink reception. The apparatus 10 can use the additional M antennas 20 for reception, for example, diversity reception (DR) or for MIMO (N x M MIMO).

In at least some examples, antenna switches and multiplexers can be designed such that the transmit signal can be applied to any of the four antennas.

The apparatus can operate in a **time-divided mode** where radio transmission 30 and radio reception 32 are not concurrent and use the same antenna with time-division. Additional antennas can be used to provide diversity reception (DR)and/or multiple-input multiple-output (MIMO). The apparatus 10 in this mode uses at least the antenna 20 used for uplink transmission for downlink reception. Table 1 provides examples.

**Table 1:**

| System configuration | Ant1 | Ant2 | Ant3 | Ant4 | Purpose |
|---|---|---|---|---|---|
| Rank1 Low Data rate | TX On RX On | - | - | - | Non-diversity reception |
| Rank1 Low Data rate (Increased SNR) | TX On RX On | DR On | - | - | Diversity reception |
| Rank2 Mid Data rate | RX On | - | TX On RX On | | MIMO (N x 2) |
| Rank4 High Data rate | RX On | TX On RX On | RX On | RX On | MIMO (N x 4) |

The modes of concurrent radio transmission 30 and radio reception 32, in the same time-frequency channel, use multiple antennas 20. The concurrent transmission 30 and reception 32 are on different ones of the multiple antennas 20. The apparatus 10 is configured to select concurrent transmission 30 and reception 32 at overlapping frequencies 64 (overlapping duplex mode) or at non-overlapping frequencies 66A, 66B (non- overlapping duplex mode).

The non-overlapping duplex modes can be:
(i) a non-overlapping duplex mode with frequency specific filtration 90, and/or
(ii) a non-overlapping duplex mode with cancellation.

The cancellation can be signal interference cancellation (SIC) or differential signal interference cancellation.

Table 2 provides an example of a non-overlapping duplex mode with frequency specific filtration 90. Table 3 provides an example of a non-overlapping duplex mode with cancellation.

**Table 2**

| System configuration | Ant1 | Ant2 | Ant3 | Ant4 | Purpose |
|---|---|---|---|---|---|
| (i) Rank1 Non-overlapping duplex mode. Filtration | TX On | RX On | | | Isolation by filtration |
| (ii) Rank1 Non-overlapping duplex mode. Filtration w. diversity | TX On | RX On | | DR On | Isolation by filtration diversity reception |
| (iii) Rank2 Non-overlapping duplex mode. Filtration w. MIMO | TX On | RX On | | RX On | Isolation by filtration Nx2 MIMO |

In Table 2, there are three examples of operation where filtration 90 may be sufficient for improved signal quality.

In row (i), there are separate antennas for reception and transmission and additional isolation is provided through one or more switchable filters . The filters can have a narrower bandwidth than the operational band. The apparatus 10 has additional inband filtration.

Row (ii) is similar to row (i) except that an additional antenna 20 is available for diversity reception. There is also filtration 90 in the receiver.

Row (iii) is similar to row (i) except that an additional antenna 20 is available for MIMO reception. There are two reception antennas 20 used for MIMO.

**Table 3**

| System configuration | Ant1 | Ant2 | Ant3 | Ant4 | Purpose |
|---|---|---|---|---|---|
| (i) Rank1 Non-overlapping duplex mode Cancellation | TX On | RX On | Rx (TX Cancel) | | Cancellation |
| (ii) Rank1 Non-overlapping duplex mode Cancellation w. diversity | TX On | RX On | Rx (TX Cancel) | DR On | Cancellation diversity reception |
| (iii) Rank2 Non-overlapping duplex mode Cancellation w. MIMO | TX On | RX On | Rx (TX Cancel) | RX On | Cancellation MIMO (N x2) |
| (iv) Rank1 Non-overlapping duplex mode Improved cancellation | TX On | RX On | Rx (Differential TX Cancel) | Rx (Differential TX Cancel) | Differential Cancellation |

Table 3 provides an example of a non-overlapping duplex mode with cancellation. This mode of operation can operate without filtration or operate with filtration.

This mode can for example be used with filtration when any frequency separation of transmission and reception as well as the additional filtration is insufficient to achieve sufficient isolation from its own transmission in the reception path. Therefore, the apparatus 10 will in addition (or alternatively) make use of an antenna 20 and receive path for cancellation.

In the table there are four examples of non-overlapping duplex mode with cancellation.

In row (i), there are separate antennas 20 for reception and transmission and an additional reception antenna is used for self-interference cancellation.

Row (ii) is similar to row (i) except that a further additional antenna 20 is available for diversity reception.

Row (iii) is similar to row (i) except that a further additional antenna 20 is available for MIMO reception. There are two reception antennas 20 used for MIMO.

In row (iv), there are separate antennas 20 for reception and transmission and one or more additional antennas 20 used for differential self-interference cancellation.

The **overlapping duplex modes** can be: an overlapping duplex mode with cancellation. There is no frequency specific filtration 90. Table 4 provides an example of an overlapping duplex mode with cancellation.

**Table 4**

| System configuration | Ant1 | Ant2 | Ant3 | Ant4 | Purpose |
|---|---|---|---|---|---|
| (i) Rank1 Overlapping duplex mode. | TX On | RX On | TX Cancel Differential+ | TX Cancel Differential- | Differential Cancellation |
| | | | | | |
| Improved cancellation | | | | | |
| (ii) Rank1 | TX On | RX On | TX Cancel | | Cancellation |
| Overlapping duplex mode. | | | | | |
| (iii) Rank1 Overlapping duplex mode. | TX On | RX On | TX Cancel | DR On | Cancellation & diversity reception (x1) |
| Diversity | | | | | |
| (iv) Rank2 Overlapping duplex mode. MIMO | TX On | RX On | TX Cancel | RX On | Cancellation & 2x2-MIMO |

In table 4 there are four examples of non-overlapping duplex mode with cancellation. In row (i), there are separate antennas for reception and transmission and one or more additional antennas used for differential self-interference cancellation.

In row (ii), there are separate antennas for reception and transmission and an additional reception antenna is used for self-interference cancellation.

Row (iii) is similar to row (ii) except that a further additional antenna 20 is available for diversity reception.

Row (iv) is similar to row (ii) except that a further additional antenna 20 is available for MIMO reception. There are two reception antennas 20 used for MIMO.

Table A summarizes the options for the non-overlapping duplex mode:

**Table A**

| non-overlapping duplex mode | single Rx [UE] | diversity Rx [UE] | MIMO Rx [network] |
|---|---|---|---|
| filtration | Y | Y | Y |
| cancellation | Y | Y | Y |
| improved cancellation | Y | Y | |

Table B summarizes the options for the overlapping duplex mode:

**Table B**

| overlapping duplex mode | single Rx [UE] | diversity | MIMO |
|---|---|---|---|
| filtration | N | N | N |
| cancellation | Y | Y | Y |
| improved cancellation | Y | Y | |

From the foregoing, it should be appreciated that, in at least some examples, the apparatus 10 can be configured to selectively perform:
a) time-divided mode (Table 1)
b) non-overlapping duplex mode (Tables 2, 3, A)
c) overlapping duplex mode (Tables 4, B)

In relation to the non-overlapping duplex mode and the overlapping duplex mode the apparatus 10 can be configured to selectively perform SIC 70 or differential SIC 80.

In relation to the non-overlapping duplex mode, the apparatus 10 can be configured to selectively perform frequency selective filtering 90.

The apparatus 10 can also be configured to selectively perform diversity reception and/or multiple-input multiple-output.

The duplex modes require a minimum of two antennas- one for transmitting and one for receiving. If there are additional antennas available, they can be used for:
cancellation (SIC or differential SIC);
diversity reception;
multiple-input or multiple-output.

In at least some examples, the network 100 commands the apparatus 10 to perform the non-overlapping duplex mode or the overlapping duplex mode.

In at least some examples, the network 100 commands the apparatus 10 to perform MIMO, if possible.

The network 100 can determine which commands to send to the apparatus 10 as downlink messages 102 based, amongst other metrics, on uplink messages 104 from the apparatus 10 reporting capability and/or dynamically indicating duplex mode feasibility.

In at least some examples, the apparatus 10 itself determines whether or not to use frequency selective filtration, if available.

In at least some examples, the apparatus 10 itself determines how best to use available antennas and selects between:
cancellation (e.g. SIC or differential SIC) and/or
diversity reception,
or selects the number of the available antennas used for
cancellation and/or the number of available antennas used for diversity reception.

This selection can cause the reconfiguration of the antennas for the selected purpose. In other examples, this selection can cause the apparatus 10 to send a reconfiguration request to the network 100 and await a reply before reconfiguring the antennas 20 for the selected purpose.

The apparatus 10 can reconfigure the use of antennas based on availability and other criteria. The apparatus 10 can therefore dynamically configure which available antennas 20, if any, are used for cancellation (e.g., SIC or differential SIC) and/or are used for diversity reception. The trigger for dynamic reconfiguration can be that an antenna becomes available, a timer, a message 102 from the network or some other interrupt.

In at least some examples, the apparatus 10 selects which antennas 20 to use for which purpose based on link quality at the antennas.

In at least some examples, the apparatus 10 selects which antennas to use for which purpose based on isolation between antennas. For example, transmission and reception can occur on antenna ports with high isolation and cancellation can occur via the antenna port that receives the strongest transmission signal as it provides the highest signal-to-noise ratio (SNR) for the interference cancellation algorithm.

The decisions made at the apparatus 10 can, for example, be based on real-time evaluation of performance of the antennas 20 with respect to the current operational frequency band and mode of operation. There can be dynamic selection between the overlapping and non-overlapping duplex modes based on "in the field" runtime repeated evaluation of antenna performance at the apparatus 10.

In at least some examples, if the apparatus 10 places a higher priority on downlink quality it preferentially selects diversity reception. Whereas, if the apparatus 10 places a higher priority on mitigating uplink transmission interference it preferentially selects cancellation.

The apparatus 10 can therefore measure downlink quality and/or uplink transmission interference for the purpose of dynamically configuring which available antennas 20, if any, are used for cancellation (e.g., SIC or differential SIC) and/or used for diversity reception. The trigger for this dynamic reconfiguration can be changes to the downlink quality and/or uplink transmission interference.

The apparatus 10 can determine how best to use available antennas based on one or more of the following parameters:
- Signal levels
- Quality of signal
- Isolation measurements
- transmission output power levels
- Filtration availability
- Number of antennas to be used for cancellation
- Diversity support in addition to duplexing scheme
- MIMO support in addition to duplexing scheme
- Grip (human hand) or proximity of any human body parts (hands, head, arms, torso, etc) or proximity sensing.

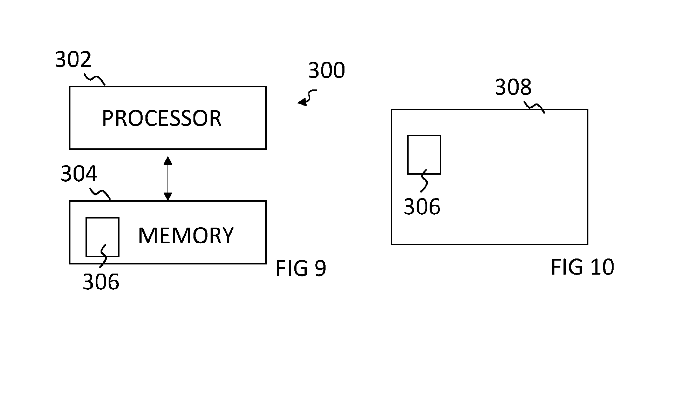

Fig 9 illustrates an example of a controller 300 suitable for controlling operation of the apparatus 10. Implementation of a controller 300 may be as controller circuitry. The controller 300 may be implemented in hardware alone, have certain aspects in software including firmware alone or can be a combination of hardware and software (including firmware).

As illustrated in Fig 9 the controller 300 may be implemented using instructions that enable hardware functionality, for example, by using executable instructions of a computer program 306 in a general-purpose or special-purpose processor 302 that may be stored on a computer readable storage medium (disk, memory etc) to be executed by such a processor 302.

The processor 302 is configured to read from and write to the memory 304. The processor 302 may also comprise an output interface via which data and/or commands are output by the processor 302 and an input interface via which data and/or commands are input to the processor 302.

The memory 304 stores a computer program 306 comprising computer program instructions (computer program code) that controls the operation of the apparatus 10 when loaded into the processor 302. The computer program instructions, of the computer program 306, provide the logic and routines that enables the apparatus to perform the methods illustrated in the preceding FIGs. The processor 302 by reading the memory 304 is able to load and execute the computer program 306.

The apparatus 10 therefore comprises:
at least one processor 302; and
at least one memory 304 including computer program code
the at least one memory 304 and the computer program code configured to, with the at least one processor 302, cause the apparatus 10 at least to perform:
   selecting concurrent transmission 30 and reception 32 on different ones of the multiple antennas 20;
   selecting concurrent transmission 30 and reception 32 at overlapping frequencies 64 or at non-overlapping frequencies 66A, 66B;
   selecting one of non-diversity reception 32, diversity reception 32, or MIMO reception 32.

As illustrated in Fig 10, the computer program 306 may arrive at the apparatus 10 via any suitable delivery mechanism 308. The delivery mechanism 308 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 306. The delivery mechanism may be a signal configured to reliably transfer the computer program 306. The apparatus 10 may propagate or transmit the computer program 306 as a computer data signal.

Computer program instructions for causing an apparatus to perform at least the following or for performing at least the following:
selecting concurrent transmission 30 and reception 32 on different ones of the multiple antennas 20;
selecting concurrent transmission 30 and reception 32 at overlapping frequencies 64 or at non-overlapping frequencies 66A, 66B; and
selecting one of non-diversity reception 32, diversity reception 32, or MIMO reception 32.

The computer program instructions may be comprised in a computer program, a non-transitory computer readable medium, a computer program product, a machine readable medium. In some but not necessarily all examples, the computer program instructions may be distributed over more than one computer program.

Although the memory 304 is illustrated as a single component/circuitry it may be implemented as one or more separate components/circuitry some or all of which may be integrated/removable and/or may provide permanent/semi-permanent/ dynamic/cached storage.

Although the processor 302 is illustrated as a single component/circuitry it may be implemented as one or more separate components/circuitry some or all of which may be integrated/removable. The processor 302 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs may represent steps in a method and/or sections of code in the computer program 306. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus configured to enable different modes of concurrent radio transmission and radio reception, in the same time-frequency channel, using multiple antennas, the apparatus comprising means for
a) selecting concurrent transmission and reception on different ones of the multiple antennas,
b) selecting concurrent transmission and reception at overlapping frequencies or at non-overlapping frequencies,
c) selecting one of non-diversity reception, diversity reception, or multiple-input multiple-output (MIMO) reception.

2. An apparatus as claimed in claim 1 wherein concurrent transmission and reception in the same time-frequency channel comprises simultaneous transmission and reception in the same operational frequency band.

3. An apparatus as claimed in claim 1 or 2, configured to selectively enable self-interference cancellation at reception; and/or
configured to selectively enable differential self-interference cancellation at reception using signals received at two or more antennas; and/or
configured to selectively enable frequency specific filtration at reception when concurrent transmission and reception at non-overlapping frequencies has been selected.

4. An apparatus as claimed in any preceding claim, wherein selection of concurrent transmission and reception at overlapping frequencies or at non-overlapping frequencies is controlled by messages received from a network and/or wherein selection of MIMO reception is controlled by messages received from a network.

5. An apparatus as claimed in claim 4, wherein the messaging from the network is dependent upon a data transfer demand provided to the network by the apparatus, wherein MIMO reception provides higher bandwidth.

6. An apparatus as claimed in any preceding claim wherein selecting non-diversity reception is controlled by the apparatus and/or wherein selecting diversity reception is controlled by the apparatus.

7. An apparatus as claimed in claim 6, wherein selection is based on a number of available antennas
and/or selection is based on a quality of a reception communication channel between a network and the apparatus.

8. An apparatus as claimed in any preceding claim configured to selectively enable self-interference cancellation at reception; wherein selectively enabling self-interference cancellation is controlled by the apparatus.

9. An apparatus as claimed in claim 8, wherein determining whether or not to selectively enable self-interference cancellation is based on an extent of interference by transmission from the apparatus on reception at the apparatus.

10. An apparatus as claimed in claim 8 or 9 configured to selectively enable differential self-interference cancellation at reception; wherein selecting between self-interference cancellation and differential self-interference cancellation is controlled by the apparatus.

11. An apparatus as claimed in claim 8, wherein determining whether or not to selectively enable self-interference cancellation or differential self-interference cancellation is based on a number of available antennas.

12. An apparatus as claimed in any preceding claim configured to selectively enable frequency specific filtration at reception, wherein selecting frequency specific filtration at reception is controlled by the apparatus.

13. An apparatus as claimed in any preceding claim configured or configurable as user equipment.

14. A method for enabling different modes of concurrent radio transmission and radio reception, in the same time-frequency channel, using multiple antennas, the method comprising:
a) selecting concurrent transmission and reception on different ones of the multiple antennas,
b) selecting concurrent transmission and reception at overlapping frequencies or at non-overlapping frequencies,
c) selecting one of non-diversity reception, diversity reception, or MIMO reception.
